# EUROPEAN PATENT APPLICATION

(11) **EP 2 388 991 A1**
(43) Date of publication of application: **23.11.2011**
(21) Application number: 11164788.9
(22) Date of filing: 04.05.2011
(51) Int. Cl.: H04N 5/44, G06F 3/033, G06F 3/023

(54) **Information processing system and information processing apparatus**

(30) Priority: 19.05.2010 JP 2010115837
(71) Applicant: Sony Corporation, Tokyo 108-0075 (JP)
(72) Inventor: Takizawa, Shuichi, Minato-ku Tokyo 108-0075 (JP); Ota, Yoshinori, Minato-ku Tokyo 108-0075 (JP); Hasegawa, Naoki, Minato-ku Tokyo 108-0075 (JP); Yamasaki, Takayoshi, Minato-ku Tokyo 108-0075 (JP); Nagai, Norihiro, Minato-ku Tokyo 108-0075 (JP)
(74) Representative: Turner, James Arthur

(57) **Abstract**

An information processing system including an information processing apparatus and a remote controller. The remote controller includes a cursor key operation unit capable of performing a focus shift operation to cause a user to shift a focus and an enter input operation to cause the user to select an object as an selection candidate on which the focus is disposed and a mouse operation unit capable of performing a cursor pointer movement operation to move a cursor pointer and an enter input operation to cause the user to select the object indicated by the cursor pointer. The information processing apparatus includes a judgment unit to judge the object selected and a first enter input restriction unit to invalidate the enter input operation of the mouse operation unit performed within a preset time period from when a latest focus shift operation of the cursor key operation unit is performed.

## Description

The present invention relates to an information processing system and an information processing apparatus.

In recent years, most of various household electric appliances such as a recording and reproducing apparatus and a television apparatus can be subjected to remote control with a supplied remote controller. These days, an apparatus that is connected to the Internet and makes a Web page browsing possible is also being general. For an operation unit of a remote controller, keys such as direction keys and ten keys are usually employed. Therefore, for example, in the case where a text part to which a hyperlink is set for browsing of a Web page is selected by a key operation, it is necessary to repeat the key operation for moving a focus until the focus reaches a target text part, that is, it is difficult to perform an efficient operation.

In view of the above, a remote controller has been proposed which enables a cursor to be freely moved like a mouse with a key operation by switching modes (Japanese Patent Application Laid-open No. 2005-229594 (paragraphs 0058 and 0059) (hereinafter, referred to as Patent Document 1)). According to Patent Document 1, if a direction button of the remote controller is pressed when a mouse mode is selected, a cursor pointer is moved in a direction of the direction button of the remote controller. If the direction button is continuously pressed, the cursor pointer is also continuously moved. With this structure, the operability like an actual mouse can be obtained.

However, it is still difficult to perform free movement operation of a cursor pointer like an actual mouse by putting the up, down, right and left direction buttons of a remote controller into full use.

In view of this, a remote controller to which a cursor key operation unit and a mouse operation unit are integrally provided has been studied. The cursor key operation unit and the mouse operation unit of the remote controller are operated as operation systems independent of each other. That is, the cursor key operation unit is used as an operation system to cause a user to shift a focus position for visualizing one of a plurality of objects displayed on a display screen as a selection candidate and cause the user to select the object as the selection candidate on which the focus is positioned. On the other hand, the mouse operation unit is used as an operation system to cause the user to move a cursor pointer displayed on the display surface and cause the user to select an object indicated by the cursor pointer. The different operation systems are integrally provided to the remote controller, thereby allowing the user to perform the operations by using an easy-to-use operation system for the user in accordance with the structure of a GUI (graphical user interface) or an application displayed. But, the following problem arises.

Because the focus of the cursor key operation unit and the cursor pointer of the mouse operation unit are independent of each other, those can select different objects. Let us imagine the case where the user tries to use a function allocated to a certain object with the cursor key operation unit. If the user operates the cursor key operation unit to shift the focus to a target object as the selection candidate but erroneously uses the mouse operation unit to input Enter, when the cursor pointer is disposed on another object at this time, the object indicated by the cursor pointer is selected. As a result, a function allocated to not the target object but another object is started.

In view of the above-mentioned circumstances, it is desirable to provide an information processing system and an information processing apparatus capable of preventing the occurrence of such an erroneous operation that a function allocated to an object that is not intended by a user is executed and capable of upgrading the operability.

Various respective aspects and features of the invention are defined in the appended claims. Combinations of features from the dependent claims may be combined with features of the independent claims as appropriate and not merely as explicitly set out in the claims.

Embodiments of the invention can perform a selection operation of an object displayed on a display screen with a cursor key and a mouse and performs information processing assigned to the object selected.

According to an embodiment of the present invention, there is provided an information processing system including an information processing apparatus and a remote controller. The information processing apparatus is configured to be capable of displaying a plurality of objects as selection targets on a display screen. The remote controller is configured to perform remote control by communicating with the information processing apparatus. The remote controller is configured to include a cursor key operation unit configured to be capable of performing a focus shift operation to cause a user to shift a position of a focus for visualizing one of the plurality of objects displayed on the display screen as a selection candidate and performing an enter input operation to cause the user to select the object as the selection candidate on which the focus is disposed, and a mouse operation unit configured to be capable of performing a cursor pointer movement operation to cause the user to move a cursor pointer that is displayed on the display screen and performing an enter input operation to cause the user to select the object indicated by the cursor pointer. The information processing apparatus is configured to include a judgment unit configured to judge the object selected by the user by operating the cursor key operation unit and the mouse operation unit of the remote controller, and a first enter input restriction unit configured to invalidate the enter input operation of the mouse operation unit which is performed within a preset time period from when a latest focus shift operation of the cursor key operation unit is performed.

According to the embodiment of the present invention, the first enter input restriction unit invalidates the enter input operation of the mouse operation unit which is performed within the preset time period from when the latest focus shift operation of the cursor key operation unit is performed, with the result that it is possible to reduce the occurrence of an erroneous operation of executing a function assigned to an object at which the user does not aim, which can improve the operability.

The information processing system may further include a display restriction unit configured to cause the cursor pointer of the mouse operation unit to be invisible during the preset time period from when the latest focus shift operation of the cursor key operation unit is performed. With this structure, the user can recognize the time period during which the selection operation with the mouse operation unit is invalidated.

The information processing system may further include a second enter input restriction unit configured to invalidate at least the enter input operation of the cursor key operation unit which is performed within a preset time period from when a latest cursor pointer movement operation of the mouse operation unit is performed.

The information processing system may further include a display restriction unit configured to cause the focus of the cursor key operation unit to be invisible during the preset time period from when the latest cursor pointer movement operation of the mouse operation unit is performed. With this structure, the user can recognize the time period during which the selection operation with the cursor key operation unit is invalidated.

According to another embodiment of the present invention, there is provided an information processing apparatus including a communication unit, a judgment unit, and a first enter input restriction unit. The communication unit is configured to communicate with a remote controller including a cursor key operation unit capable of performing a focus shift operation to cause a user to shift a position of a focus for visualizing one of a plurality of objects displayed on a display screen as a selection candidate and performing an enter input operation to cause the user to select the object as the selection candidate on which the focus is disposed, and a mouse operation unit configured to be capable of performing a cursor pointer movement operation to cause the user to move a cursor pointer that is displayed on the display screen and performing an enter input operation to cause the user to select the object indicated by the cursor pointer. The judgment unit is configured to judge the object selected by the user by operating the cursor key operation unit and the mouse operation unit of the remote controller. The first enter input restriction unit is configured to invalidate the enter input operation of the mouse operation unit which is performed within a preset time period from when a latest focus shift operation of the cursor key operation unit is performed.

As described above, according to the embodiments of the present invention, it is possible to reduce the occurrence of the erroneous operation of executing a function assigned to an object at which the user does not aim, which can improve the operability.

These and other objects, features and advantages of the present invention will become more apparent in light of the following detailed description of example embodiments thereof, as illustrated in the accompanying drawings, in which:
Fig. 1 is a diagram showing an information processing system according to an embodiment of the present invention;
Fig. 2 is a block diagram showing the hardware structure of a reproduction apparatus in the information processing system shown in Fig. 1;
Fig. 3 is a block diagram showing the hardware structure of a remote controller in the information processing system shown in Fig. 1;
Fig. 4 is a plan view showing the layout of key buttons of the remote controller shown in Fig. 3;
Fig. 5 is a diagram showing an example of a GUI displayed on a screen in the information processing system shown in Fig. 1;
Fig. 6 is a diagram for explaining a problem of an object selection operation on the GUI;
Fig. 7 is a diagram for explaining a problem of the object selection operation on the GUI;
Fig. 8 is a flowchart showing the process of control on the basis of an operation input from a cursor key operation unit by the information processing system shown in Fig. 1;
Fig. 9 is a flowchart showing the process of control with respect to an enter input from a mouse operation unit by the information processing system shown in Fig. 1;
Fig. 10 is a flowchart showing the process of control on the basis of an operation input from the mouse operation unit by the information processing system shown in Fig. 1; and
Fig. 11 is a flowchart showing the process of control with respect to an enter input from the cursor key operation unit by the information processing system shown in Fig. 1.

Hereinafter, an embodiment of the present invention will be described with reference to the drawings.

### (System configuration)

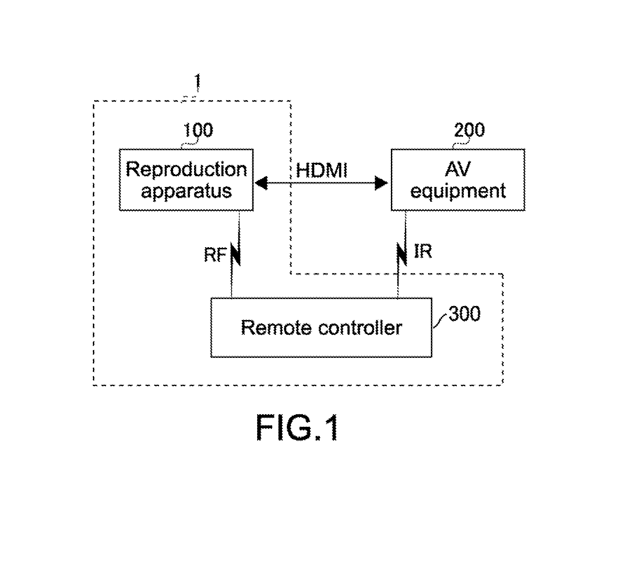

Fig. 1 is a diagram showing an information processing system according to an embodiment of the present invention.

An information processing system 1 includes a reproduction apparatus 100 (information processing apparatus) and a remote controller 300. To the reproduction apparatus 100, an AV (audio visual) equipment 200 is connected as external equipment.

The reproduction apparatus 100 is capable of reproducing a video content and an audio content that are recorded in a recording medium such as a BD (Blu-ray disc (registered trademark)) and a DVD (digital versatile disc). The reproduction apparatus may be a recording and reproduction apparatus having a recording function.

The AV equipment 200 is equipment which is connected with the reproduction apparatus 100 through an interface for data transmission. As the interface for data transmission, an HDMI (high-definition multimedia interface) system is used, for example. The AV equipment 200 is, for example, a television apparatus, and is capable of receiving broadcast waves of a content and performing reproduction, and capable of outputting a video signal and an audio signal which are supplied from the reproduction apparatus 100 through the interface for data transmission.

The remote controller 300 is a remote controller supplied to the reproduction apparatus 100. The remote controller 300 can perform bidirectional wireless communication with the reproduction apparatus 100 with the use of an RF (radio frequency) signal. The remote controller 300 can remotely control the reproduction apparatus 100 with the use of an RF (radio frequency) signal, and performs IR (infrared) communication, thereby making it possible to remotely control the AV equipment 200 that is connected to the reproduction apparatus 100 through the interface for data transmission.

### (Hardware structure of reproduction apparatus)

Next, the hardware structure of the reproduction apparatus 100 will be described.

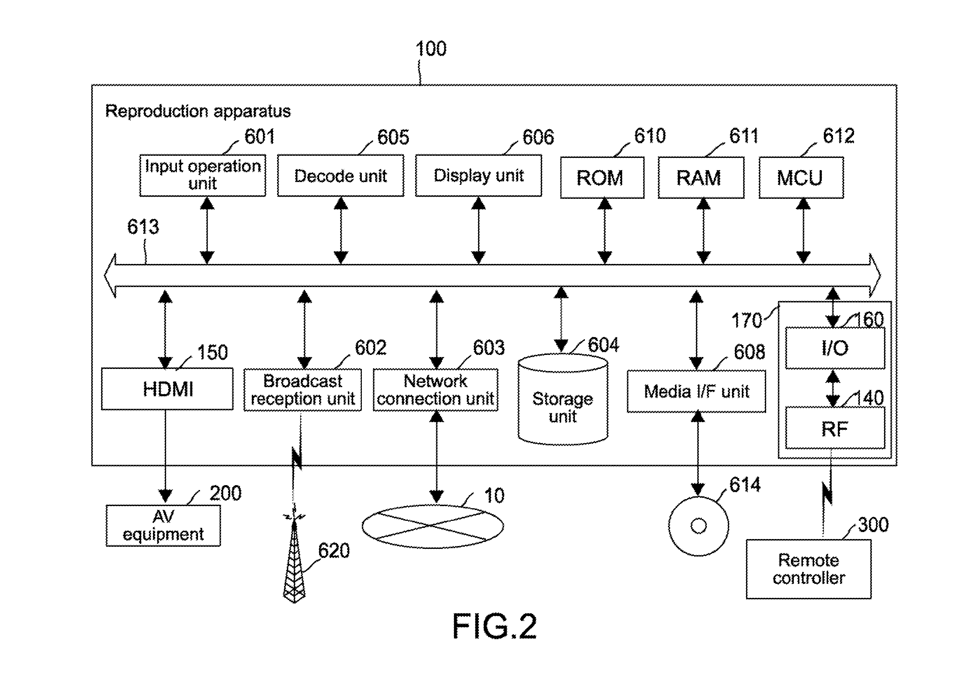

Fig. 2 is a block diagram showing the hardware structure of the reproduction apparatus 100.

In the reproduction apparatus 100, to an MCU (micro control unit) 612, an input operation unit 601, a broadcast reception unit 602, a network connection unit 603, a storage unit 604, a decode unit 605, a display unit 606, an HDMI connection unit 150, a media interface unit 608, an RF transmission and reception unit 170, and a ROM (read only memory) 610, and a RAM (random access memory) 611 are connected via a system bus 613.

The input operation unit 601 is provided with various keys or the like. A user uses the input operation unit 601 to input various commands or data. The various commands input from the input operation unit 601 by the user are supplied to the MCU 612 via the system bus 613.

The broadcast reception unit 602 receives a transport stream distributed from each broadcast station 620, such as terrestrial digital TV broadcasting, CS digital broadcasting, and BS digital broadcasting.

The network connection unit 603 processes the connection with an Internet 10.

The storage unit 604 is formed of a large-volume recording medium such as an HDD (hard disc drive) and an SSD (solid state drive), and a broadcast content or the like received by the broadcast reception unit 602 is recorded thereto.

The decode unit 605 decodes data of a content which is read from the recording unit 604 and reconstruct digital video data and digital audio data. The digital video data and digital audio data reconstructed are supplied to the HDMI connection unit 150 via the system bus 613.

The display unit 606 is constituted of a display provided with a display screen such as an LCD (liquid crystal display), a display control circuit for driving the display, and the like. The display unit 606 displays various statuses, verification of the command or data input by the user, or the like.

To the HDMI connection unit 150, the AV equipment 200 can be connected. The HDMI connection unit 150 inputs and outputs the video signal and the audio signal to and from the AV equipment 200 connected thereto.

To the media interface unit 608, a removable medium 614 such as an optical disc can be attached. In the removable medium 614, data of a broadcast content can be recorded, for example. As the removable medium 614, a write-once DVD, a rewritable DVD, a Blu-ray disc, or the like is used.

The RF transmission and reception unit 170 is an interface for processing bidirectional communication with the remote controller 300 with the use of the RF signal with an antenna. The RF transmission and reception unit 170 has an RF circuit unit 140 and an I/O (input/output) conversion unit 160.

The RF circuit unit 140 processes the RF signal. The I/O conversion unit 160 demodulates the reception RF signal supplied from the RF circuit unit 140, generates reception data, and modulates a transmission RF signal from transmission data, for example.

The ROM 610 is a read-only memory in which programs, data, and the like for software processing that should be executed by the reproduction apparatus 100 are permanently stored. It should be noted that the programs may be stored in the storage unit 604.

The RAM 611 is a writable volatile memory which is used to load a program code executed by the MCU 612 or write work data of a program.

The MCU 612 performs overall control of units of the reproduction apparatus 100 and performs control of exchange of data between the units. The MCU 612 performs overall control of the units described above and performs control of exchange of data between the units. In order to execute the software processing that should be executed by the reproduction apparatus 100, the MCU 612 loads a necessary program from the ROM 610 to the RAM 611 and interprets and executes the program.

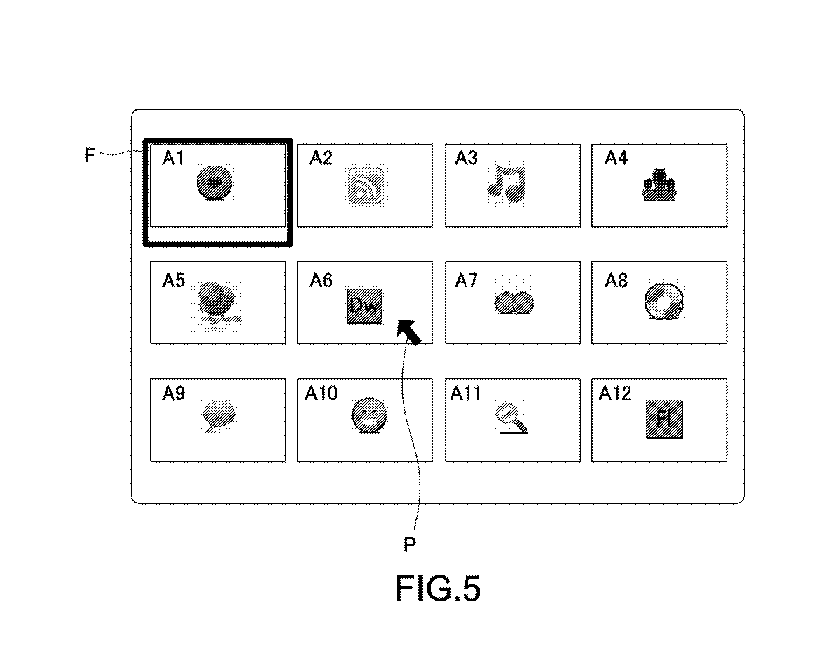

As described above, the reproduction apparatus 100 is structured by using the typical computer hardware. The programs stored in the ROM 610 cause the computer hardware of the reproduction apparatus 100 to function as units shown in Fig. 5.

### (Hardware structure of remote controller)

Next, the hardware structure of the remote controller 300 will be described.

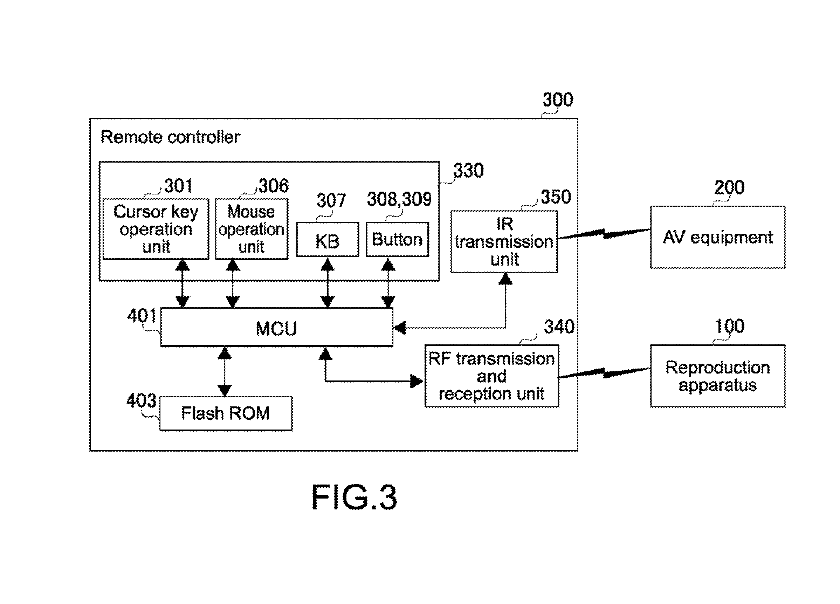

Fig. 3 is a block diagram showing the hardware structure of the remote controller 300.

The remote controller 300 has an MCU (micro control unit) 401, an RF transmission and reception unit 340, a flash ROM 403, an input operation unit 330, and an IR transmission unit 350.

The RF transmission and reception unit 340 performs bidirectional transmission and reception of an RF signal with the reproduction apparatus 100.

The input operation unit 330 is constituted of a plurality of keys and outputs signals corresponding to the respective keys to the MCU 401.

The flash ROM 403 is a read-only memory in which programs, data, and the like for software processing that should be executed by the remote controller 300 are permanently stored.

IR transmission unit 350 transmits an IR signal for remote control to the AV equipment 200.

Here, the input operation unit 330 will be described in more detail.

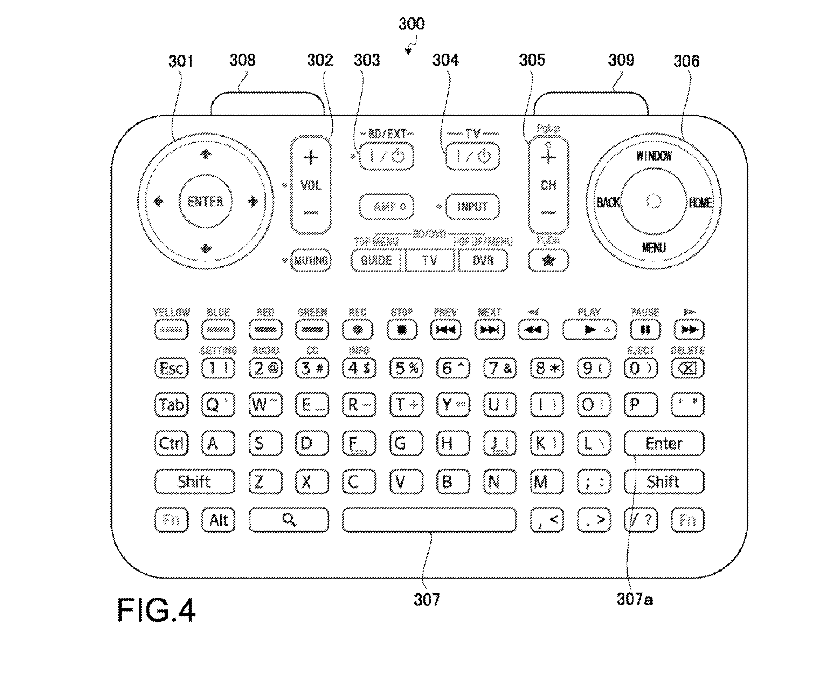

Fig. 4 is a plan view showing the layout of various key buttons of the input operation unit 330.

The input operation unit 330 includes a cursor key operation unit 301, a volume key 302, a reproduction apparatus power key 303, an AV equipment power key 304, a channel key 305, a mouse operation unit 306, a keyboard unit 307, a scrolling button 308, a zoom button 309, and the like. With the use of those keys 301 to 309, a command is input to the remote controller 300 by the user.

The cursor key operation unit 301 has a cursor key in up, down, right, and left directions and an enter key provided in the center thereof. The cursor key operation unit 301 is used to shift the focus for visualizing an object in a selection candidate state brought by the user on a menu screen displayed on the AV equipment 200, by the number of objects corresponding to the number of presses in the direction indicated by the cursor key.

The volume key 302 is used to adjust the volume of the audio content reproduced by the reproduction apparatus 100 or the audio content reproduced by the AV equipment 200.

The reproduction apparatus power key 303 is used to turn on and off the power of the reproduction apparatus 100.

The AV equipment power key 304 is used to turn on and off the power of the AV equipment 200.

The channel key 305 is used to select a broadcast station as a supply source of the broadcast waves received by the AV equipment 200.

The mouse operation unit 306 is an optical mouse operation unit. When the user slides the finger placed thereon or taps the mouse operation unit with the finger, a command is input to the remote controller 300 from the user. The mouse operation unit 306 has a window key, a home key, a menu key, and a back key. The user taps the key with the finger placed thereon, thereby displaying a screen corresponding to the command. The mouse operation unit 306 is generally used when a web page is viewed via a wide area network.

The keyboard unit 307 is used to input a character string or used to perform a predetermined function by pressing a function key and a predetermined character key at the same time. An enter key 307a of the keyboard unit 307 is used to determine a predetermined operation.

The scrolling button 308 is used to perform scrolling display of the display screen displayed on the AV equipment 200. For example, the user slides the finger placed on the mouse operation unit 306 in a predetermined direction while pressing the scrolling button 308, thereby achieving the scrolling display of the display screen displayed on the AV equipment 200.

The zoom button 309 is used to zoom the display screen displayed on the AV equipment 200. For example, the user slides the finger placed on the mouse operation unit 306 in a predetermined direction while pressing the zoom button 309, thereby zooming the display screen displayed on the AV equipment 200.

As described above, the remote controller 300 has not only the keys (reproduction apparatus power key 303 and the like) for the remote control of the reproduction apparatus 100 but also keys (AV equipment power key 304 and the like) for the remote control of the AV equipment 200 connected to the reproduction apparatus 100. In addition, the remote controller 300 has keys (mouse operation unit 306 and the like) for the operation for viewing a web page via the Internet 10 to which the reproduction apparatus 100 is connected.

### (Hardware structure of AV equipment)

The detailed description about the hardware structure of the AV equipment 200 will be omitted. The AV equipment 200 has minimal hardware components, such as a broadcast reception unit, a controller, a nonvolatile memory, a main memory, an input operation unit, a display screen, an audio output unit, an HDMI connection unit, and an IR reception unit, in order to function as the AV equipment for displaying an image content reproduced by the reproduction apparatus 100.

### (About GUI display and selection operation of object)

Next, a description will be given on a GUI (graphical user interface) displayed on the AV equipment 200 connected to the reproduction apparatus 100 and the operation of an object on the GUI.

The storage unit 604 of the reproduction apparatus 100 stores GUI data such as a menu which is displayed on the AV equipment 200. The MCU 612 of the reproduction apparatus 100 reads the GUI data from the storage unit 604 and supplies the GUI data to the AV equipment 200 through the HDMI connection unit 150, thereby displaying the GUI on the screen of the AV equipment 200. The MCU 612 can perform selection processing of an object on the GUI screen on the basis of an operation signal of the cursor key operation unit and the mouse operation unit from the remote controller 300 with respect to the GUI screen of the AV equipment 200.

Fig. 5 is a diagram showing an example of the GUI displayed on the screen of the AV equipment 200.

For the GUI, a plurality of objects A1 to A12 which respectively correspond to a plurality of functions capable of being executed by the reproduction apparatus 100 and the AV equipment 200 are arranged as operation targets by the user by three objects in a vertical direction and four objects in a traverse direction, for example. The functions capable of being executed by the reproduction apparatus 100 refer to, for example, a programming setting of the reproduction apparatus 100, a connection and browsing with respect to a pre-registered web site by a web browser, various settings of the reproduction apparatus 100, or the startup of applications which are introduced in the reproduction apparatus 100 in advance as tools. Further, to the predetermined objects on the GUI, a function for switching to another purpose or a subordinate menu screen may be assigned. The subordinate menu screen may also be a GUI having the same structure as that shown in Fig. 5.

In the GUI, the objects A1 to A12 have the same size and shape. On approximately the center of each of the objects A1 to A12, a picture symbol for enabling the user to visually recognize a function assigned to each of the objects A1 to A12 is disposed. Further, a character string or the like that shows an object name for recognizing the function assigned to each of the objects A1 to A12 may be disposed in each of the objects A1 to A12.

In the GUI, the display state of the objects A1 to A12 is dynamically switched on the basis of the operation of the cursor key operation unit 301 of the remote controller 300. One display state refers to a "focused state", and the other display state refers to a "unfocused state". In Fig. 5, the object A1 is in the focused state (focus F). The focused state is a display state for enabling the user to distinguish at a glance only an object in a selection candidate state from the other objects (objects in the unfocused state) thanks to a highlighted display, a thick-framed display, a colored display, or the like.

The user can shift the object in the focused state F on the GUI by operating the cursor key of the cursor key operation units 301. At this time, one operation (pressing operation) of the cursor key causes the focused state (focus F) to shift to the next object in a direction assigned to the cursor key. If the user operates the enter key of the cursor key operation unit 301 when the focus F is shifted to a target object, the MCU 612 of the reproduction apparatus 100 performs control so that the function assigned to the object in the focused state (focus F) is started.

In addition, in the GUI, it is possible to freely select a position on the GUI screen on the basis of the operation of the mouse operation unit 306 of the remote controller 300. That is, in a position on the GUI screen which is selected by operating the mouse operation unit 306, a cursor pointer P is displayed. The user shits the cursor pointer P to a position of an object to which a function to be started is assigned by operating the mouse operation unit 306. After that, when the user performs an enter input operation with respect to the mouse operation unit 306, the MCU 612 determines the object on which the cursor pointer P is positioned and performs control so that the function which is assigned to the object is started.

Incidentally, for the mouse operation unit 306 of the remote controller 300, a mechanism of an optical mouse including an image sensor is adopted, for example. In the mouse operation unit 306, an opening from which the image sensor takes an image is formed. If the user put the finger on the opening and moves the finger in the direction in which the cursor pointer P is intended to be moved, the direction and amount of the operation by the user is recognized on the basis of change in temporally previous and following image data taken by the image sensor, and operation information thereof is transmitted to the reproduction apparatus 100 as an RF signal. The MCU 612 of the reproduction apparatus 100 shifts the cursor pointer P on the GUI screen on the basis of the operation information received.

In addition, the mouse operation unit 306 of the remote controller 300 is structured so that a disc unit on the center portion of which the aforementioned opening is formed can tilt at least rightwards and leftwards. In other words, the disc unit is supported by an elastic structure (not shown) so as to maintain the state parallel to a surface of a casing of the remote controller 300 which is close thereto. When the user presses, with the finger, either of the right portion and the left portion of the disc unit against the elastic force of the elastic structure, the disc unit is brought into a tilted attitude. The mouse operation unit 306 detects the tilted state of the disc unit in the rightward or leftward direction by detecting an electrical connection state between contact points, for example. In the mouse operation unit 306 of the remote controller 300, the operation for tilting the disc unit leftwards is set as the enter input operation, and the operation information corresponding to the enter input operation is transmitted as an RF signal to the reproduction apparatus 100 from the remote controller 300. On the basis of the operation information received, the MCU 612 of the reproduction apparatus 100 starts the function assigned to an object on which the cursor pointer P is disposed.

Incidentally, in the GUI, the cursor key operation unit 301 and the mouse operation unit 306 are simultaneously effective and operate independently of each other. Therefore, on the GUI screen, positions selected by the operation systems can be displayed at the same time by the focus F and the cursor pointer P. By providing the two operation systems in this way, the user can select an object with one of the operation systems which the user wants to use at any time, with the result that the improvement of the operability can be expected. However, the following problem arises.

In Fig. 5, the focus F is on the object A1 at the upper left corner, and the cursor pointer P is on the object A6. Because the two operation systems are operated independently, the state in which different objects are selected as candidates can be caused.

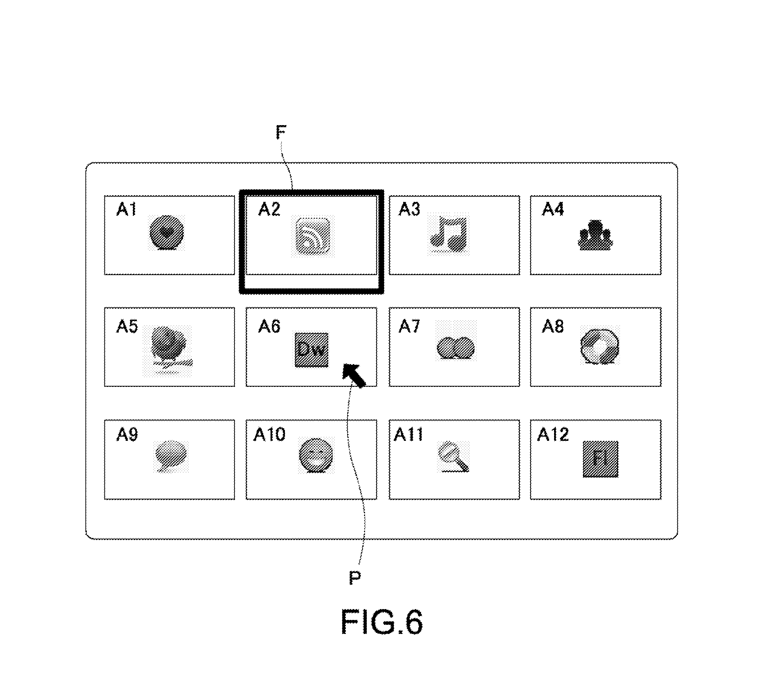

Here, the assumption is made that the user operates the cursor key operation unit 301 to try to use the function assigned to the object A2 disposed to the immediate right of the object A1 on which the focus F is currently disposed. When the user presses the right cursor key of the cursor key operation unit 301 once, the focus F is shifted to the object A2 as shown in Fig. 6. After that, when the enter key on the center portion of the cursor key operation unit 301 is operated, the function assigned to the object A2 is started. At this time, however, if the user carelessly performs the enter input operation with the mouse operation unit 306, because the cursor pointer P is disposed on the object A6, the function which is assigned to the object A6 and which the user does not intend to start is started.

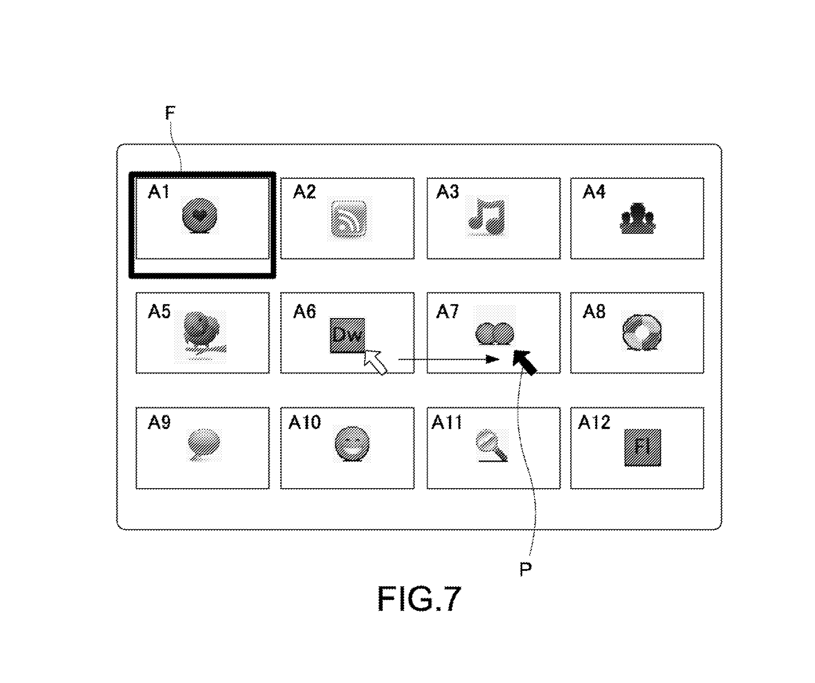

In contrast, the assumption is made that the user operates the mouse operation unit 306 to try to use a function assigned to the object A7. As described above, in the state shown in Fig. 5, the focus F is on the object A1 at the upper left corner. The user moves the cursor pointer P to the position of the target object A7 with the mouse operation unit 306, and then performs the enter input operation with the mouse operation unit 306, thereby making it possible to start the function assigned to the target object A7. However, as shown in Fig. 7, after the cursor pointer P is moved to the position of the object 7 with the mouse operation unit 306, if the user erroneously operates the enter key at the center portion of the cursor key operation unit 301, the function assigned to the object A1, on which the focus F is disposed at this time, is started, although the user does not intend to start the function.

In view of the above, in this embodiment, in a preset time period from the latest shift operation of one of the operation systems of the remote controller 300, at least the enter input operation of the input operations of the other operation systems is set to be invalid. That is,
1. The MCU 612 invalidates the enter input from the mouse operation unit 306 in a preset time period from the latest focus shift operation with the cursor key operation unit 301.
2. The MCU 612 invalidates the enter input from the cursor key operation unit 301 in a preset time period from the latest shift operation of the cursor pointer P with the mouse operation unit 306.

The control of the above item 1 will be described.

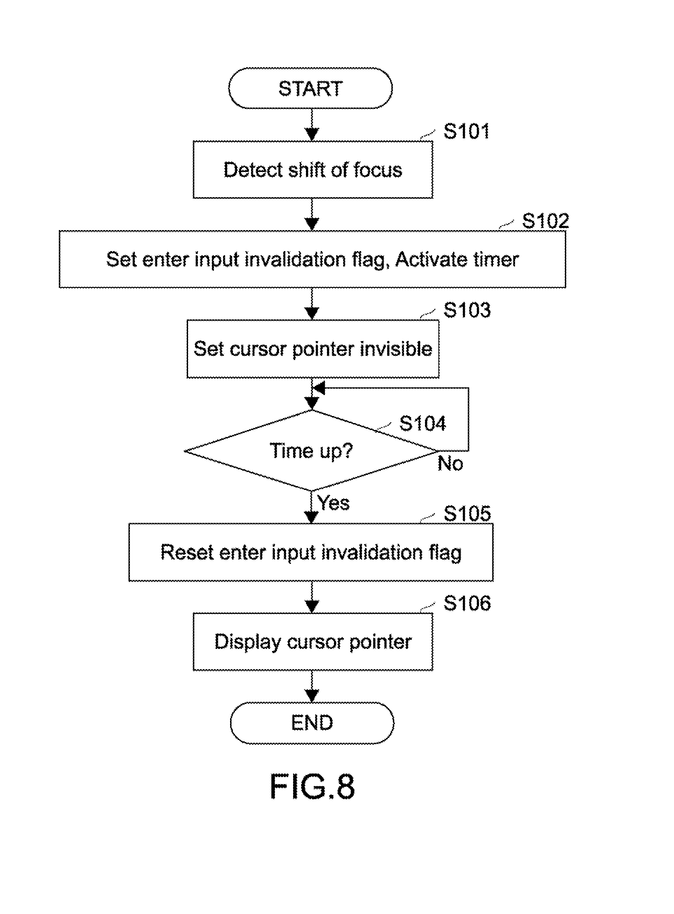

Fig. 8 is a flowchart showing the process of the control of the MCU 612 on the basis of the operation input from the cursor key operation unit 301.

Each time the MCU 612 detects the shit of the focus F on the GUI screen along with the operation of one of the up, down, right, and left cursor keys of the cursor key operation unit 301 (Step S101), the MCU 612 sets an enter input invalidation flag for controlling possibility and impossibility of the enter input of the mouse operation unit 306, and at the same time, starts up a timer (Step S102).

After that, the MCU 612 brings the cursor pointer P into a non-display state (Step S103). As a result, the user can intuitively recognize that the enter input from the mouse operation unit 306 is invalidated.

The timer is set for a certain time period in advance. When the certain time period elapses, the fact that the time is up is notified. The setting time period of the timer is determined in consideration of a time period in the case where the enter input operation is erroneously performed with the mouse operation unit 306 following the shift of the focus F with the cursor key of the cursor key operation unit 301 as described above. More specifically, approximately two to five seconds are set. It should be noted that the setting time period of the timer may be freely set by the user.

When the time is up (Yes in Step S104), the MCU 612 resets the enter input invalidation flag (Step S105). Subsequently, the MCU 612 displays the cursor pointer P again (Step S106).

Those processes are the flow of the control performed each time the MCU 612 detects the shift of the focus F on the GUI screen along with the operation of one of the up, down, right, and left cursor keys of the cursor key operation unit 301.

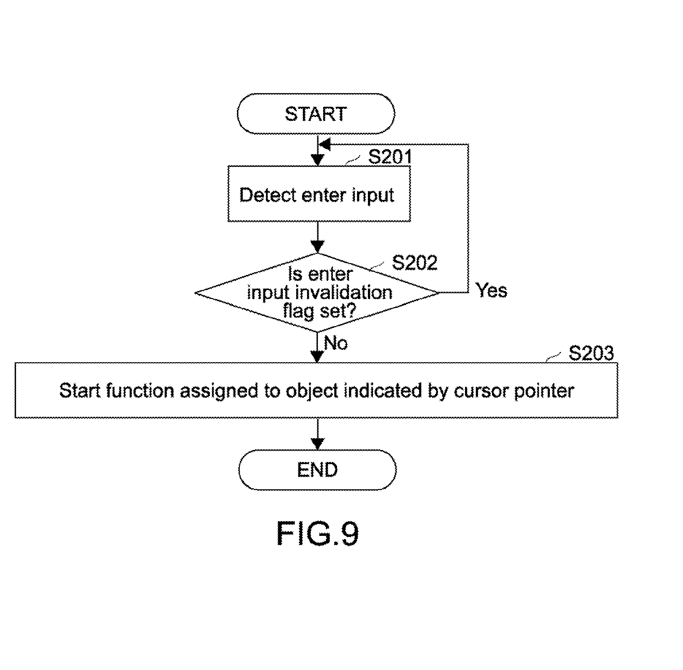

Next, the control performed by the MCU 612 each time the enter input of the mouse operation unit 306 is caused will be described. Fig. 9 is a flowchart showing the process of the control with respect to the enter input from the mouse operation unit 306 in the control of the above item 1.

The MCU 612 monitors the enter input from the mouse operation unit 306. When detecting the enter input from the mouse operation unit 306 (Step S201), the MCU 612 checks the enter input invalidation flag (Step S202). In the case where the enter input invalidation flag is not set (No in Step S202), the MCU 612 starts a function assigned to an object indicated by the cursor pointer P when the enter is input from the mouse operation unit 306 (Step S203). On the other hand, in the case where the enter input invalidation flag is set (Yes in Step S202), the MCU 612 invalidates the enter input from the mouse operation unit 306 and returns to the state of monitoring the next enter input from the mouse operation unit 306. When the enter is input from the mouse operation unit 306 in the case where the enter input invalidation flag is set, the fact that the enter input is invalidated may be displayed or notified by sounds, vibrations, or the like as an error operation for the user.

Subsequently, the control of the above item 2 will be described.

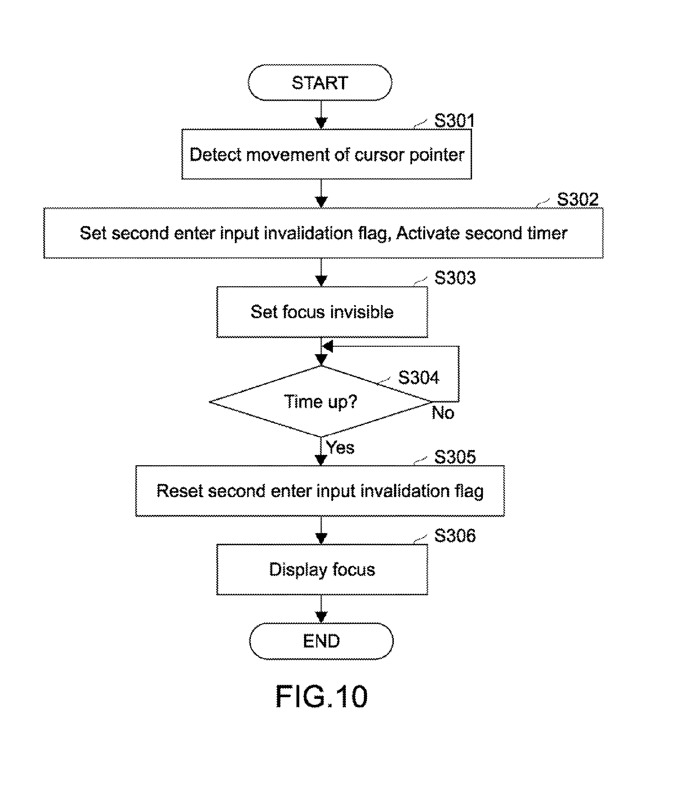

Fig. 10 is a flowchart showing the process of the control of the MCU 612 on the basis of the operation input from the mouse operation unit 306.

Each time the MCU 612 detects the shit of the cursor pointer P along with the operation of the mouse operation unit 306 (Step S301), the MCU 612 sets a second enter input invalidation flag for controlling possibility and impossibility of the enter input of the cursor key operation unit 301, and at the same time, starts up a second timer (Step S302).

After that, the MCU 612 brings the focus F on the GUI screen into a non-display state (Step S303).

The second timer is set for a certain time period in advance. When the certain time period elapses, the fact that the time is up is notified. The setting time period of the second timer is determined in consideration of a time period in the case where the enter input operation is erroneously performed with the cursor key operation unit 301 following the shift of the cursor pointer P with the mouse operation unit 306 as described above. More specifically, approximately two to five seconds are set. It should be noted that the setting time period of the second timer may be freely set by the user. The setting time periods of the timer described above and the second timer may be set to be equal to each other or be different from each other.

When the time of the second timer is up (Yes in Step S304), the MCU 612 resets the second enter input invalidation flag (Step S305). Subsequently, the MCU 612 displays the focus F again (Step S306).

Those processes are the flow of the control performed each time the MCU 612 detects the shift of the cursor pointer P by the operation of the mouse operation unit 306.

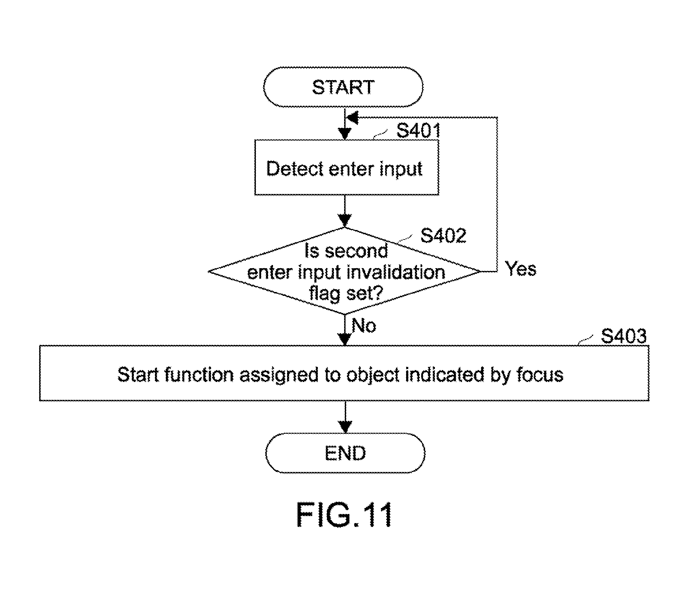

Next, the control performed by the MCU 612 each time the enter input of the cursor key operation unit 301 is caused will be described. Fig. 11 is a flowchart showing the process of the control with respect to the enter input from the cursor key operation unit 301 in the control of the above item 2.

The MCU 612 monitors the enter input from the cursor key operation unit 301. When detecting the enter input from the cursor key operation unit 301 (Step S401), the MCU 612 checks the second enter input invalidation flag (Step S402). In the case where the second enter input invalidation flag is not set (No in Step S402), the MCU 612 performs control so as to start a function assigned to an object indicated by the focus F immediately before the enter is input from the cursor key operation unit 301 (Step S403). On the other hand, in the case where the second enter input invalidation flag is set (Yes in Step S402), the MCU 612 invalidates the enter input from the cursor key operation unit 301 and returns to the state of monitoring the next enter input from the cursor key operation unit 301. When the enter is input from the cursor key operation unit 301 in the case where the second enter input invalidation flag is set, the fact that the enter input is invalidated may be displayed or notified by sounds, vibrations, or the like as an error operation for the user.

The controls of the above items 1 and 2 are performed in parallel at the same time.

By the above-described processes, in this embodiment, in the preset time period from when the latest shift operation of the focus F or the cursor pointer P of one operation system of the remote controller 300 is performed, at least the enter input of the input operations of the other operation system is invalidated. As a result, it is possible to reduce the occurrence of such an erroneous operation that the function assigned to the object which the user does not intend to start is executed, which can improve the operability.

### <Modified example 1>

In the above embodiment, only the enter input is invalidated. However, in the preset time period from when the latest shift operation of the focus F or the cursor pointer P of one operation system is performed, not only the enter input of the other operation system but also an input for moving the focus F, the cursor pointer P, or the like may be invalidated.

### <Modified example 2>

In the above embodiment, the remove controller 300 is described, but the present invention is not limited to this and is applicable to a controller having the structure in which the controller is connected to an apparatus with a cable.

It should be noted that the present invention is not limited to the embodiment described above and can be variously modified within the scope of the technical idea of the present invention.

The present application contains subject matter related to that disclosed in Japanese Priority Patent Application JP 2010-115837 filed in the Japan Patent Office on May 19, 2010.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing system, comprising:
an information processing apparatus configured to be capable of displaying a plurality of objects as selection targets on a display screen; and
a remote controller configured to perform remote control by communicating with the information processing apparatus, wherein
the remote controller is configured to include
a cursor key operation unit configured to be capable of performing a focus shift operation to cause a user to shift a position of a focus for visualizing one of the plurality of objects displayed on the display screen as a selection candidate and performing an enter input operation to cause the user to select the object as the selection candidate on which the focus is disposed, and
a mouse operation unit configured to be capable of performing a cursor pointer movement operation to cause the user to move a cursor pointer that is displayed on the display screen and performing an enter input operation to cause the user to select the object indicated by the cursor pointer, and
the information processing apparatus is configured to include
a judgment unit configured to judge the object selected by the user by operating the cursor key operation unit and the mouse operation unit of the remote controller, and
a first enter input restriction unit configured to invalidate the enter input operation of the mouse operation unit which is performed within a preset time period from when a latest focus shift operation of the cursor key operation unit is performed.

2. The information processing system according to claim 1, further comprising
a display restriction unit configured to cause the cursor pointer of the mouse operation unit to be invisible during the preset time period from when the latest focus shift operation of the cursor key operation unit is performed.

3. The information processing system according to claim 2, further comprising
a second enter input restriction unit configured to invalidate at least the enter input operation of the cursor key operation unit which is performed within a preset time period from when a latest cursor pointer movement operation of the mouse operation unit is performed.

4. The information processing system according to claim 3, further comprising
a display restriction unit configured to cause the focus of the cursor key operation unit to be invisible during the preset time period from when the latest cursor pointer movement operation of the mouse operation unit is performed.

5. An information processing apparatus, comprising:
a communication unit configured to communicate with a remote controller including a cursor key operation unit capable of performing a focus shift operation to cause a user to shift a position of a focus for visualizing one of a plurality of objects displayed on a display screen as a selection candidate and performing an enter input operation to cause the user to select the object as the selection candidate on which the focus is disposed, and a mouse operation unit configured to be capable of performing a cursor pointer movement operation to cause the user to move a cursor pointer that is displayed on the display screen and performing an enter input operation to cause the user to select the object indicated by the cursor pointer;
a judgment unit configured to judge the object selected by the user by operating the cursor key operation unit and the mouse operation unit of the remote controller; and
a first enter input restriction unit configured to invalidate the enter input operation of the mouse operation unit which is performed within a preset time period from when a latest focus shift operation of the cursor key operation unit is performed.
